# EUROPÄISCHE PATENTSCHRIFT

(11) **EP 1 733 472 B1**
(45) Veröffentlichungstag und Bekanntmachung des Hinweises auf die Patenterteilung: **22.12.2010**
(21) Anmeldenummer: 05707897.4
(22) Anmeldetag: 31.01.2005
(51) Int. Cl.: H02P 9/30, H02P 9/02, H02J 7/14, H02J 7/24

(54) **VERFAHREN UND VORRICHTUNG ZUR ÜBERTRAGUNG EINER KENNUNG FÜR DEN TYP EINES GENERATORS AN EIN STEUERGERÄT EINES KRAFTFAHRZEUGS**
METHOD AND DEVICE FOR TRANSMITTING A GENERATOR IDENTIFICATION TO A MOTOR VEHICLE CONTROL DEVICE
PROCEDE ET DISPOSITIF POUR TRANSMETTRE UNE IDENTIFICATION DU TYPE D'UN GENERATEUR A UN APPAREIL DE COMMANDE D'UNE AUTOMOBILE

(30) Priorität: 27.03.2004 DE 102004015126
(43) Veröffentlichungstag der Anmeldung: 20.12.2006
(73) Patentinhaber: ROBERT BOSCH GMBH, 70442 Stuttgart (DE)
(72) Erfinder: LABITZKE, Herbert, 71706 Markgroeningen (DE); SUELZLE, Helmut, 71691 Freiberg (DE)
(86) Internationale Anmeldenummer: PCT/EP2005/050394
(87) Internationale Veröffentlichungsnummer: WO 2005/093941

(56) Entgegenhaltungen:
- EP-A- 0 783 994
- EP-A- 1 193 825
- DE-A1- 4 332 078
- DE-A1- 19 611 908

## Beschreibung

Die Erfindung betrifft ein Verfahren nach Anspruch 1 und eine Vorrichtung nach Anspruch 4 zur Übertragung einer Kennung für den Typ eines Generators an ein Steuergerät eines Kraftfahrzeugs.

### Stand der Technik

Es ist bereits ein Fahrzeugbordnetz bekannt, welchem eine Fahrzeugbatterie, Verbraucher und ein Starter angehören. Die Fahrzeugbatterie wird im Fahrbetrieb von einem Generator geladen, der von einem Spannungsregler geregelt wird. Der Spannungsregler steht mit dem Motorsteuergerät des Fahrzeugs in Verbindung.

In den letzten Jahren wird der Anteil des Generators am Gesamtmoment im Fahrzeug zunehmend größer. Um das Leerlaufverhalten des Fahrzeugs beherrschen zu können, wird der Generator in die Betrachtung eines Momentenmodells der Motorsteuerung mit einbezogen. Dabei erfolgt beispielsweise eine Berechnung des aktuellen Momentes des Generators unter Verwendung von in der Motorsteuerung abgespeicherten Kennfeldern. Um diese Berechnung durchführen zu können, ist eine Kenntnis des Typs und damit der Größe des Generators notwendig. Bei Fahrzeugen, die einen Regler mit digitaler Schnittstelle aufweisen, wird diese Information über den Typ des Generators dem Steuergerät über die genannte digitale Schnittstelle bereitgestellt.

Bei Fahrzeugen, die einen Regler ohne digitale Schnittstelle haben und deren Steuergerät die Kenntnis des Typs des Generators nicht hat, ist es bekannt, einen Mittelwert über die in einer Applikation eingesetzten Generatortypen zum Zwecke der Berechnung des aktuellen Momentes des Generators zu verwenden. Das erhaltene Ergebnis ist dementsprechend ungenau.

Aus der DE 199 49 031 A1 ist eine Vorrichtung zur automatischen Erkennung des Typs des Generators eines Kraftfahrzeugs bekannt. Diese bekannte Vorrichtung weist einen Generator, der über eine Schnittstelle mit einem Steuergerät verbunden ist, und eine Batterie auf. Das Steuergerät enthält einen Speicher, in welchem Daten von unterschiedlichen Generatortypen gespeichert sind. Weiterhin ist das Steuergerät derart ausgebildet, dass durch ein Ein- und Ausschalten einer elektrischen Last der Spannungsverlauf am Generator erfasst und durch einen Vergleich mit den gespeicherten Daten der Typ des Generators bestimmt werden kann.

Aus der EP 1 193 825 A1 sind Verfahren bzw. Vorrichtungen zur Übertragung einer Kennung für den Typ eines Generators vom Generatorregler an ein Steuergerät eines Kraftfahrzeugs bekannt. Dabei wird ein Startvorgang des Kraftfahrzeugs erkannt und nach der Starterkennung ein Übertragen der Kennung für den Typ des Generators vom Regler über eine analoge Signalleitung an das Steuergerät durchgeführt. Nachdem das Steuergerät den Generatortyp erkannt hat, ermittelt es seinerseits ein Ansteuersignal, das dem Regler zugeführt wird. Der Regler bildet dann die Ansteuersignale für den Generator in Abhängigkeit des vom Steuergerät zugeführten Signals aus.

### Vorteile der Erfindung

Gemäß der vorliegenden Erfindung wird auch beim Vorliegen eines Reglers ohne digitale Schnittstelle dem Steuergerät eine Information über den Typ und damit die Größe des vorliegenden Generators übermittelt. Diese Übermittlung erfolgt automatisch nach der Erkennung eines Startvorganges des Kraftfahrzeugs über eine zwischen dem Regler und dem Steuergerät vorgesehene analoge Signalleitung.

Vorzugsweise handelt es sich bei dieser analogen Signalleitung um diejenige Signalleitung, über welche nach der Beendigung des Startvorganges, also im normalen Regelbetrieb des Generators, das Signal DFM, das dem aktuellen Tastverhältnis der Endstufe des Reglers entspricht, an das Steuergerät übertragen wird. Diese Information über das Tastverhältnis der Endstufe des Reglers ist während des Startvorganges für das Steuergerät nicht relevant. Folglich kann diese Startphase dazu benutzt werden, dem Steuergerät vom Regler aus eine Kennung über den Typ des vorhandenen Generators zu übermitteln.

Vorzugsweise erfolgt diese Übertragung der Kennung in Form einer Sequenz, die eine Information für ein Tastverhältnis enthält, das für den Typ des Generators charakteristisch ist.

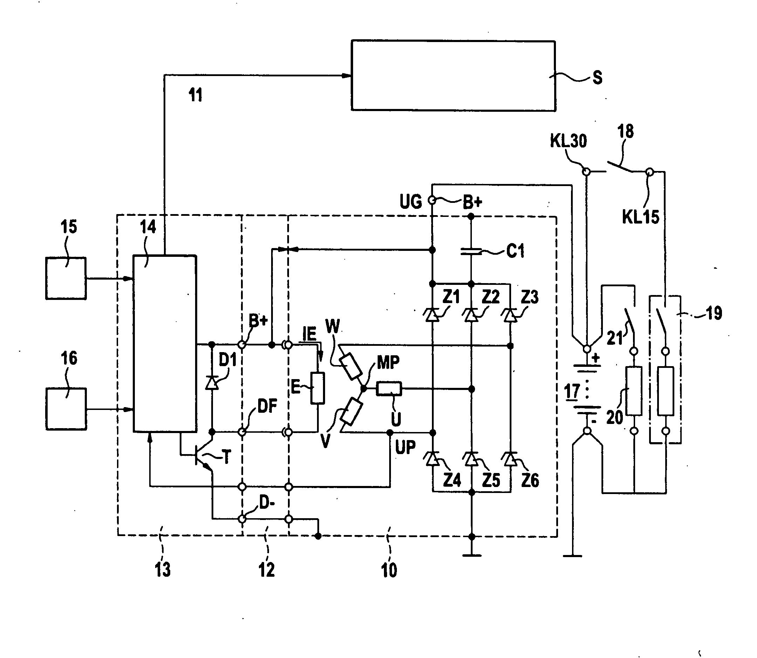

Nachfolgend wird die Erfindung anhand der Zeichnung näher erläutert.

### Zeichnung

Die Figur zeigt ein Ausführungsbeispiel zur Erläuterung der Erfindung.

### Beschreibung

In der Figur sind die zum Verständnis der Erfindung wesentlichen Bestandteile eines Spannungsversorgungssystems in einem Kraftfahrzeug dargestellt. Das Spannungsversorgungssystem weist einen Drehstromgenerator 10 auf, der von einer nicht dargestellten Brennkraftmaschine angetrieben wird und Phasenwicklungen U, V und W umfasst. Diese sind sternförmig angeordnet und über einen gemeinsamen Punkt MP miteinander verbunden. Am Ausgang der Phasenwicklungen entsteht bei sich drehendem Generator die Phasenspannung UP. Die Phasenwicklungen U, V und W sind mit einer Gleichrichterbrücke 11 verbunden, welche Zenerdioden Z1 bis Z6 umfasst. Die Gleichrichterbrücke liegt einerseits auf Masse und führt andererseits zum Anschluss B+ des Generators, an welchem die vom Generator abgegebene, gleichgerichtete Ausgangsspannung UG bereitgestellt wird.

Weiterhin weist der Generator 10 eine Erregerwicklung E auf, die über den Bürstenhalter 12 mit den Anschlüssen B+ und DF des Spannungsreglers 13 verbunden ist. Zwischen dem Anschluss DF und dem Anschluss D- des Spannungsreglers 13, der über den Bürstenhalter 12 auf Masse geführt ist, ist ein Schalttransistor T vorgesehen, über den der Erregerstrom IE durch die Erregerwicklung E geregelt werden kann. Die Basis dieses Schalttransistors T wird von einer Steuereinheit 14 des Spannungsreglers 13 angesteuert.

Der Steuereinheit 14 werden von einer Sensoreinheit 15 Sensorsignale zugeführt, anhand derer die Steuereinheit erkennt, ob ein Start des Kraftfahrzeugs vorliegt. Die Sensoreinheit 15 enthält beispielsweise einen Beschleunigungssensor, der an einer Stelle der Brennkraftmaschine angebracht ist, an der besonders hohe Beschleunigungswerte auftreten. Die nach einem Starten des Motors in der Startphase auftretenden Beschleunigungswerte erlauben ein sicheres Erkennen eines Startvorganges.

Als weiteres Eingangssignal wird der Steuereinheit 14 die Phasenspannung UP zugeführt, die beispielsweise an der Phasenwicklung V abgegriffen wird und über entsprechende Anschlüsse am Bürstenhalter 12 bzw. Spannungsregler 13 weitergleitet wird.

Der Anschluss B+ des Reglers 13 und der zugehörige Anschluss der Erregerwicklung E sind mit der Generatorklemme B+ verbunden, wobei der Anschluss innerhalb des Generators 10 über den Bürstenhalter 12 erfolgen kann. Zwischen dem Anschluss B+ des Spannungsreglers 13 und dessen Anschluss DF ist eine Diode D1 geschaltet.

Weiterhin weist der Drehstromgenerator 10 einen Kondensator C1 auf, der zwischen die Kathoden der Zenerdioden Z1, Z2, Z3 und Masse geschaltet ist.

Das in der Figur dargestellte Fahrzeugbordnetz weist eine Batterie 17 auf, deren Pluspol mit der Generatorklemme B+ verbunden ist und deren Minuspol auf Masse liegt. Der Pluspol der Batterie 17 ist weiterhin mit der Klemme 30 verbunden, die über den Zündschalter 18 zur Klemme 15 und damit zum Starter 19 führt. Die Verbraucher sind mit der Bezugszahl 20 bezeichnet. Sie können über Schaltmittel 21 mit dem Pluspol der Batterie 17 verbunden werden.

Die in der Figur dargestellte Vorrichtung, mittels derer eine geregelte Ausgangsspannung für das Fahrzeugbordnetz bereitgestellt wird, hat zwischen dem Generator 10 und dem Bordnetz nur zwei Verbindungen, nämlich den Anschluss B+, an dem die geregelte und gleichgerichtete Ausgangsspannung UG des Generators 10 zur Versorgung des Bordnetzes abgegriffen wird, sowie den gemeinsamen Masseanschluss D-. Die Spannungsversorgung für die Erregerwicklung E bzw. die Spannung zur Erzeugung des Erregerstromes IE wird generatorintern über die Klemme B+ abgegriffen. Die Verbindung zwischen der Erregerwicklung und Masse wird mit Hilfe des Transistors T hergestellt, sofern der Basis des Transistors T ein entsprechendes Ansteuersignal zugeführt wird. Bei stehendem Generator sperrt der Transistor T und es fließt kein Erregerstrom. Erfolgt ein Start der Brennkraftmaschine, dann beginnt sich der Generator zu drehen und es wird ein Erregerstrom benötigt. Dieser Strom für die Vorerregung wird direkt vom Anschluss B+ geliefert, sobald der Spannungsregler 13 den Start der Brennkraftmaschine erkennt. Für die Starterkennung sind verschiedene Varianten möglich, die im Folgenden beschrieben werden:

In einer ersten Variante, die bereits oben genannt ist, werden die während des Startvorganges auftretenden Beschleunigungen mit Hilfe der Sensoreinheit 15, die einen Beschleunigungssensor aufweist, registriert. Das Ausgangssignal der Sensoreinheit 15 wird der Steuereinheit 14 des Spannungsreglers 13 zugeführt. Es ist beispielsweise eine Spannung oder wird zu einer Spannung aufbereitet, die auf die Basis des Transistors T des Spannungsreglers geführt wird und diesen einschaltet. Die Sensoreinheit 15 kann auch in den Spannungsregler 13 integriert sein.

In einer zweiten Variante wird die Amplitude der über den Restmagnetismus induzierten Phasenspannung UP ausgewertet. Diese Phasenspannung wird beispielsweise an der Phase V abgegriffen und der Schaltung 14 zugeführt. Erreicht die Amplitude der Phasenspannung einen Grenzwert, dann wird der Transistor des Spannungsreglers 13 angesteuert und der Erregerstrom eingeschaltet. Da die Phasenspannung bzw. das Phasensignal im Regler 13 ohnehin vorhanden ist, werden keine zusätzlichen Leitungen oder Anschlüsse benötigt.

In einer dritten Variante wird die Frequenz der Phasenspannung UP ausgewertet. Die Frequenz der über den Restmagnetismus induzierten Phasenspannung ist von der Drehzahl des Generators abhängig. Durch Auswertung dieser Frequenz kann somit die Drehzahl ermittelt werden und mit einem vorgebbaren Schwellenwert verglichen werden. Überschreitet die Frequenz der Phasenspannung diesen Grenzwert, wird in der Schaltung 14 eine Spannung erzeugt, die der Basis des Transistors T zugeführt wird und diesen in den leitenden Zustand versetzt.

In einer vierten Variante wird der Spannungsverlauf an der Klemme B+ ausgewertet. Der Verlauf dieser Spannung während eines Startvorganges weist einige charakteristische Maxima und Minima auf. Wird der erwartete Spannungsverlauf erkannt, muss ein Startvorgang erfolgt sein. Die Erkennung des zu erwartenden Spannungsverlaufes wird ebenfalls in der Steuereinheit 14 durchgeführt. Ist ein Start erkannt, dann erfolgt wiederum eine Ansteuerung des Transistors T und der Erregerstrom IE wird eingeschaltet.

Die bisher beschriebenen verschiedenen Varianten zur Starterkennung dienen dazu, dass unmittelbar nach dem Start der Brennkraftmaschine ein ausreichender Erregerstrom IE durch die Erregerwicklung E fließt. Nachdem der Generator 10 den vollen Erregungszustand erreicht hat, muss eine Begrenzung des Erregerstromes erfolgen, damit die Ausgangsspannung UG des Generators den gewünschten Wert nicht überschreitet. Der Spannungsregler 13 geht dann vom Vorerregungs-Betriebszustand in den normalen Regelbetrieb über. Die Umschaltung von der Vorerregung auf den normalen Regelbetrieb erfolgt beispielsweise über die Auswertung des Phasensignals. Wie bereits oben im Zusammenhang mit der zweiten und dritten Variante ausgeführt wurde, ist sowohl die Amplitude der Phasenspannung als auch die Frequenz der Phasenspannung von der Drehzahl des Generators abhängig. Die Auswertung des Phasensignals ermöglicht daher eine Drehzahlbestimmung. Erreicht die aus dem Phasensignal ermittelte Drehzahl einen weiteren Schwellenwert, der höher liegt als der für die Einschaltung des Erregerstromes verwendete Schwellenwert, dann wird dies vom Regler 13 registriert und der Regler 13 geht in den normalen Regelzustand über, bei dem der Transistor T den Erregerstrom IE so regelt, dass eine konstante Ausgangsspannung UG an der Generatorklemme B+ entsteht.

Hat der Spannungsregler 13 gemäß einer der vorstehend beschriebenen Varianten erkannt, dass ein Startvorgang vorliegt, dann überträgt er automatisch über eine analoge Signalleitung 11 eine Kennung für den Typ des Generators 10 an das Steuergerät S des Kraftfahrzeugs. Diese Information über den Typ des Generators 10 ist in einem der Steuereinheit 14 zugeordneten Speicher 16 nichtflüchtig in Form einer digitalen Bitkombination hinterlegt. Sie wird nach der Erkennung eines Startvorganges aus dem Speicher 16 ausgelesen und nach dem Auslesen in ein einem Tastverhältnis zugeordnetes Analogsignal umgewandelt, welches dem Steuergerät S über die analoge Signalleitung 11 zugeführt wird.

Beispielsweise kann über die Leitung 11 nach der Erkennung eines Startvorganges folgende Sequenz an das Steuergerät S übertragen werden:
5% 5% 5% 5% 5% 5% Bit1 Bit2 ... Bitn 5% 5% 5% 5% 5%.

Dabei sind Bit1 ... Bitn beispielsweise wie folgt definiert:
33%-Aussteuerung entspricht einem Bit mit dem Wert 0;
66%-Aussteuerung entspricht einem Bit mit dem Wert 1;
5%-Aussteuerung entspricht einem Bit ohne Informationsgehalt.

Durch eine geeignete Wahl der Werte der Bits 1...n lassen sich pulsbreitenmodulierte Signale definieren, die jeweils für einen Generatortyp charakteristisch sind. Diese Informationen liegen auch im Steuergerät S vor. Wird - wie oben beschrieben - nach dem Erkennen eines Startvorgangs eine derartige Sequenz, die ein für den vorhandenen Generatortyp charakteristisches pulsbreitenmoduliertes Signal enthält, automatisch vom Regler 13 über die analoge Signalleitung 11 an das Steuergerät S übertragen, dann kann das Steuergerät durch eine Auswertung der übertragenen Sequenz den Typ des vorhandenen Generators erkennen und zu einer späteren Berechnung des aktuellen Momentes des Generators unter Verwendung von abgespeicherten Kennfeldern verwenden, wobei zur Auswahl des dem vorhandenen Generatortyp zugeordneten Kennfeldes die übertragene Kennung verwendet wird.

Nach dem Ende der Startphase, d. h. im normalen Regelbetrieb des Generators 10 mittels des Reglers 13, wird über die analoge Signalleitung 11 das Signal DFM, das das Tastverhältnis der Endstufe des Reglers 13 beschreibt, an das Motorsteuergerät S übertragen. Da dieses Signal DFM während der Startphase des Kraftfahrzeugs für das Steuergerät S irrelevant ist, kann in dieser Startphase - so wie es oben beschreiben wurde - eine Sequenz übertragen werden, die in Form eines pulsbreitenmodulierten Signals eine Kennung für den Typ des vorhandenen Generators 10 enthält.

Die Erfindung erlaubt nach alledem eine Information über den Typ des vorhandenen Generators an das Steuergerät des Kraftfahrzeugs zu übertragen, obwohl der Regler des Generators keine digitale Schnittstelle aufweist.

## Patentansprüche

1. Verfahren zur Übertragung einer Kennung für den Typ eines Generators vom Regler des Generators an ein Steuergerät eines Kraftfahrzeugs mit folgenden Schritten:
- Erkennen eines Startvorgangs des Kraftfahrzeugs und
- automatisches Übertragen der Kennung vom Regler über eine analoge Signalleitung (11) an das Steuergerät nach Erkennung des Startvorgangs, wobei das Übertragen der Kennung in Form einer Sequenz vorgenommen wird, die eine Information über ein für den Typ des Generators charakteristisches Tastverhältnis oder ein für den Typ des Generators charakteristisches pulsbreiten moduliertes signal enthält.

2. Verfahren nach Anspruch 1, **dadurch gekennzeichnet, dass** das automatische Übertragen der Kennung vom Regler an das Steuergerät über eine analoge Signalleitung (11) vorgenommen wird, die nach der Beendigung des Startvorganges im Regelbetrieb zur Übertragung eines das Tastverhältnis der Endstufe des Reglers beschreibenden Signals verwendet wird.

3. Verfahren nach Anspruch 1 oder 2, **dadurch gekennzeichnet, dass** die Information über das für den Typ des Generators charakteristische Tastverhältnis in Form eines Mehrbitwortes vor der Inbetriebnahme des Reglers in einem dem Regler zugeordneten Speicher nichtflüchtig abgespeichert wird, nach dem Erkennen eines Startvorganges aus dem Speicher ausgelesen wird und nach dem Auslesen in ein dem Tastverhältnis zugeordnetes Analogsignal umgesetzt wird.

4. Vorrichtung zur Übertragung einer Kennung für den Typ eines Generators, mit
- einem Generator (10),
- einem zur Regelung des Generators vorgesehenen Regler (13) und
- einem mit dem Regler (13) über eine analoge Signalleitung (11) verbundenen Steuergerät (S), wobei
- der Regler (13) dazu ausgestaltet ist, nach einer Erkennung eines Startvorganges automatisch die Kennung über die analoge Signalleitung (11) an das Steuergerät (S) zu übertragen, wobei der Regler (13) dazu ausgestaltet ist, die in digitaler Form abgespeicherte Kennung in eine Sequenz umzusetzen, die eine Information über ein für den Typ des Generators charakteristisches Tastverhältnis oder ein für den Typ des Generators charakteristisches pulsbreiten moduliertes Signal enthält, und diese Sequenz über die analoge Signalleitung (11) an das Steuergerät (S) zu übertragen.

5. Vorrichtung nach Anspruch 4, **dadurch gekennzeichnet, dass** sie einen Speicher (16) aufweist, in welchem eine Kennung für den Typ des Generators in digitaler Form abgespeichert ist.

6. Vorrichtung nach einem der Ansprüche 4 oder 5, **dadurch gekennzeichnet, dass** sie Mittel zur Erkennung eines Startvorgangs aufweist.

7. Vorrichtung nach Anspruch 6, **dadurch gekennzeichnet, dass** die Mittel zur Starterkennung eine Sensoreinheit (15) aufweisen, die einen Beschleunigungssensor enthält.

8. Vorrichtung nach Anspruch 7, **dadurch gekennzeichnet, dass** die Mittel zur Starterkennung die Amplitude einer Phasenspannung auswerten.

9. Vorrichtung nach Anspruch 7, **dadurch gekennzeichnet, dass** die Mittel zur Starterkennung die Frequenz einer Phasenspannung auswerten

10. Vorrichtung nach Anspruch 7, **dadurch gekennzeichnet, dass** die Mittel zur Starterkennung den Spannungsverlauf der an der Klemme B+ des Generators bereitgestellten Spannung auswerten.

## Claims

1. Method for transmitting an identifier for the type of generator from the generator controller to a motor vehicle control device, having the following steps of:
- detecting a starting process of the motor vehicle, and
- automatically transmitting the identifier from the controller to the control device via an analogue signal line (11) after the starting process has been detected, the identifier being transmitted in the form of a sequence which contains an item of information relating to a duty factor characteristic of the type of generator or a pulse-width-modulated signal characteristic of the type of generator.

2. Method according to Claim 1, **characterized in that** the identifier is automatically transmitted from the controller to the control device via an analogue signal line (11) which, after the completion of the starting process, is used during control operation to transmit a signal describing the duty factor of the controller output stage.

3. Method according to Claim 1 or 2, **characterized in that** the information relating to the duty factor characteristic of the type of generator is stored in a non-volatile manner in the form of a multi-bit word in a memory associated with the controller before the controller is started up, is read from the memory after a starting process has been detected and is converted into an analogue signal associated with the duty factor after it has been read.

4. Device for transmitting an identifier for the type of generator, having
- a generator (10),
- a controller (13) which is intended to control the generator, and
- a control device (S) which is connected to the controller (13) via an analogue signal line (11),
- the controller (13) being configured to automatically transmit the identifier to the control device (S) via the analogue signal line (11) after a starting process has been detected, the controller (13) being configured to convert the identifier stored in digital form into a sequence which contains an item of information relating to a duty factor characteristic of the type of generator or a pulse-width-modulated signal characteristic of the type of generator and to transmit this sequence to the control device (S) via the analogue signal line (11).

5. Device according to Claim 4, **characterized in that** it has a memory (16) in which an identifier for the type of generator is stored in digital form.

6. Device according to either of Claims 4 and 5, **characterized in that** it has means for detecting a starting process.

7. Device according to Claim 6, **characterized in that** the means for detecting a starting process have a sensor unit (15) which contains an acceleration sensor.

8. Device according to Claim 7, **characterized in that** the means for detecting a starting process evaluate the amplitude of a phase voltage.

9. Device according to Claim 7, **characterized in that** the means for detecting a starting process evaluate the frequency of a phase voltage.

10. Device according to Claim 7, **characterized in that** the means for detecting a starting process evaluate the voltage profile of the voltage provided at the terminal B+ of the generator.

## Revendications

1. Procédé de transmission d'une caractéristique du type d'un générateur entre le régulateur du générateur et un appareil de commande d'un véhicule automobile, le procédé comportant les étapes suivantes :
- détection d'une opération de démarrage du véhicule automobile et
- transmission automatique de la caractéristique par le régulateur, à l'appareil de commande sur un conducteur analogique (11) de signaux après détection de l'opération de démarrage, la transmission de la caractéristique étant réalisée sous la forme d'une séquence qui contient une information concernant un taux d'échantillonnage caractéristique du type de générateur ou un signal en impulsions de largeur modulée caractéristique du type du générateur.

2. Procédé selon la revendication 1, **caractérisé en ce que** la transmission automatique de la caractéristique entre le régulateur et l'appareil de commande est réalisée par un conducteur analogique (11) de signaux qui, lorsque l'opération de démarrage est terminée, est utilisé en régulation pour la transmission d'un signal qui décrit le taux d'échantillonnage à l'étage final du régulateur.

3. Procédé selon la revendication 1 ou 2, **caractérisé en ce qu'**avant la mise en service du régulateur, l'information concernant le taux d'échantillonnage caractéristique du type du générateur est conservée sous la forme d'un mot multibit dans une mémoire non volatile associée au régulateur, est lue dans la mémoire après la détection d'une opération de démarrage et, après la lecture, est convertie en un signal analogique associé au taux d'échantillonnage.

4. Dispositif de transmission d'une caractéristique du type d'un générateur, qui comprend :
- un générateur (10),
- un régulateur (13) prévu pour réguler le générateur et
- un appareil de commande (S) relié au régulateur (13) par un conducteur analogique (11) de signaux,
- le régulateur (13) étant configuré pour transmettre automatiquement, après la détection d'une opération de démarrage, la caractéristique à l'appareil de commande (S) par le conducteur (11) de signaux analogiques, le régulateur (13) étant configuré pour convertir la caractéristique conservée en mémoire sous forme numérique en une séquence qui contient une information sur un taux d'échantillonnage caractéristique du type du générateur ou sur un signal en impulsions à largeur modulée caractéristique du type du générateur et pour transmettre cette séquence à l'appareil de commande (S) par le conducteur (11) de signaux analogiques.

5. Dispositif selon la revendication 4, **caractérisé en ce qu'**il présente une mémoire (16) dans laquelle une caractéristique du type du générateur est conservée sous forme numérique.

6. Dispositif selon l'une des revendications 4 ou 5, **caractérisé en ce qu'**il présente des moyens de détection d'une opération de démarrage.

7. Dispositif selon la revendication 6, **caractérisé en ce que** les moyens de détection du démarrage présentent une unité de détection (15) qui contient un détecteur d'accélération.

8. Dispositif selon la revendication 7, **caractérisé en ce que** les moyens de détection du démarrage évaluent l'amplitude d'une tension de phase.

9. Dispositif selon la revendication 7, **caractérisé en ce que** les moyens de détection du démarrage évaluent la fréquence d'une tension de phase.

10. Dispositif selon la revendication 7, **caractérisé en ce que** les moyens de détection du démarrage évaluent l'évolution de la tension délivrée par la borne B+ du générateur.
